# EUROPEAN PATENT APPLICATION

(11) **EP 3 135 937 A1**
(43) Date of publication of application: **01.03.2017**
(21) Application number: 16174723.3
(22) Date of filing: 16.06.2016
(51) Int. Cl.: F16D 3/12, F16D 3/52, F16D 13/08

(54) **ELECTRIC APPARATUS, ACTUATOR AND CLUTCH THEREOF**

(30) Priority: 14.08.2015 CN 201510502454; 14.08.2015 CN 201510502051
(71) Applicant: Johnson Electric S.A., 3280 Murten (CH)
(72) Inventor: Sun, Chi Ping, Shatin, N.T. (HK); Liu, Bao Ting, Shatin, N.T. (HK); Ta, Jing Ning, Shatin, N.T. (HK); Xin, Fei, Shatin, N.T. (HK); Yeung, Shing Hin, Shatin, N.T. (HK); Yang, Xiu Wen, Shatin, N.T. (HK); Cui, Yan Yan, Shatin, N.T. (HK); Li, Yue, Shatin, N.T. (HK); Liu, Li Sheng, Shatin, N.T. (HK)
(74) Representative: Hocking, Adrian Niall

(57) **Abstract**

An actuator and its clutch (50) are provided. The clutch (50) includes a driving shaft (51); a mounting base (53) fixed to the driving shaft (51) for rotation with the driving shaft (51); a connecting base (55) for connecting with a load (40), the connecting base (55) including fingers (57) surrounding an outer circumference of the driving shaft (51); resilient member (59) including a resilient member, the resilient member (59) having two ends respectively fixed to the mounting base (53) and the connecting base (55), the resilient member (59) surrounding an outer circumference of the connecting tabs. When a rotation speed of the driving shaft (51) is greater than a rotation speed of the connecting base (55), an inner diameter of the resilient member (59) gradually decreases so as to gradually couple the coupling portion with the driving shaft (51), such that the rotation speed of the coupling portion gradually approaches or reaches the rotation speed of the driving shaft (51). The present invention can provide a buffering function at the phase of the startup of the motor (10) to avoid the motor startup failure and damage to the motor (10).

## Description

### FIELD OF THE INVENTION

The present invention relates to motors, and in particular to an actuator and a clutch thereof.

### BACKGROUND OF THE INVENTION

When the rotational inertia of a load is too large, startup of the motor may fail because the motor cannot provide sufficient rotation torque at the moment of startup, and the motor may also be damaged in such situation.

When the motor is a single phase motor which usually has a small output torque, the above situation can more easily occur.

### SUMMARY OF THE INVENTION

Thus, there is a desire for an improved actuator which can drive a larger load by using a single phase motor.

In one aspect, the present invention provides a clutch which includes a driving shaft; a connecting base for connecting with and driving a load, the connecting base comprising a coupling portion; and a resilient member comprising one end attached relative to the driving shaft for rotation with the driving shaft and the other end attached to the connecting base, the resilient member surrounding an outer circumference of the driving shaft and the coupling portion. When a rotation speed of the driving shaft is greater than a rotation speed of the connecting base, an inner diameter of the resilient member gradually decreases so as to gradually couple the coupling portion with the driving shaft, such that the rotation speed of the coupling portion gradually approaches or reaches the rotation speed of the driving shaft.

Preferably, the coupling portion comprises a plurality of flexible fingers surrounding the outer circumference of the driving shaft.

Preferably, the resilient member is a helical spring surrounding an outer circumference of the plurality of flexible fingers.

Preferably, the connecting base includes a ring-shaped portion, and the plurality of fingers extends from one side of the ring-shaped portion.

Preferably, an inner wall surface of the finger is an arc surface.

Preferably, the clutch further includes a protective tube mounted around an outer circumference of the resilient member.

In another aspect, the present invention provides an actuator including a motor and a clutch. The clutch comprises a driving shaft driven by the motor; a connecting base for connecting with and driving a load, the connecting base comprising a coupling portion; and a resilient member comprising one end attached to the driving shaft for rotation with the driving shaft and the other end attached to the connecting base, the resilient member surrounding an outer circumference of the driving shaft and the coupling portion. During the phase of the startup of the motor, the driving shaft is rotated relative to the connecting base which results in an inner diameter of the resilient member gradually decreasing so as to gradually couple the coupling portion with the driving shaft to cause the connecting base with the load to be rotated by the driving shaft.

Preferably, the coupling portion comprises a plurality of flexible fingers surrounding the outer circumference of the driving shaft.

Preferably, the motor is a single phase permanent magnet motor such as a single phase permanent magnet synchronous motor or a single phase permanent magnet direct current brushless motor.

Preferably, the clutch further includes a protective tube mounted around an outer circumference of the resilient member.

Preferably, the single phase motor comprises a stator, a permanent magnet rotor and a driving circuit, the stator comprising a stator winding adapted to be connected in series with an AC power source between a first node and a second node, the driving circuit comprising: a controllable bidirectional AC switch connected between the first node and the second node; an AC-DC conversion circuit connected in parallel with the controllable bidirectional AC switch between the first node and the second node; a position sensor configured to detect a magnetic pole position of the permanent magnet rotor; and a switch control circuit configured to control the controllable bidirectional AC switch to be switched between a switch-on state and a switch-off state in a predetermined way, based on the magnetic pole position of the permanent magnet rotor and the polarity of the AC power source such that the stator winding drives the rotor to rotate only in the predetermined direction. There is no current flowing through the AC-DC conversion circuit when the first node and the second node are short circuited by the controllable bidirectional AC switch.

The present invention further provides an electric apparatus which employs the above actuator and a fluid generating device driven by the actuator. The fluid generating device may be a fan or an impeller.

The clutch of the present invention can provide a buffering function at the phase of startup of the rotor of the single phase motor, which facilitates to avoid the motor startup failure and damage to the motor.

### BRIEF DESCRIPTION OF THE DRAWINGS

Fig. 1 is pre-assembled view of an actuator in accordance with one embodiment of the present invention.
Fig. 2 is an assembled view of the actuator of Fig. 1.
Fig. 3 to Fig. 5 illustrate the changing process of the clutch during the phase of motor startup.
Fig. 6 is a pre-assembled view of an actuator in accordance with a second embodiment of the present invention.
Fig. 7 is pre-assembled view of an actuator in accordance with a third embodiment of the present invention.
Fig. 8 illustrates an inner rotor permanent magnet brushless motor utilized in the above embodiment.
Fig. 9 is a block diagram showing a startup circuit of the motor of Fig. 8.
Fig. 10 illustrates an outer rotor permanent magnet brushless motor utilized in the above embodiment.

### DETAILED DESCRIPTION OF THE PREFERRED EMBODIMENTS

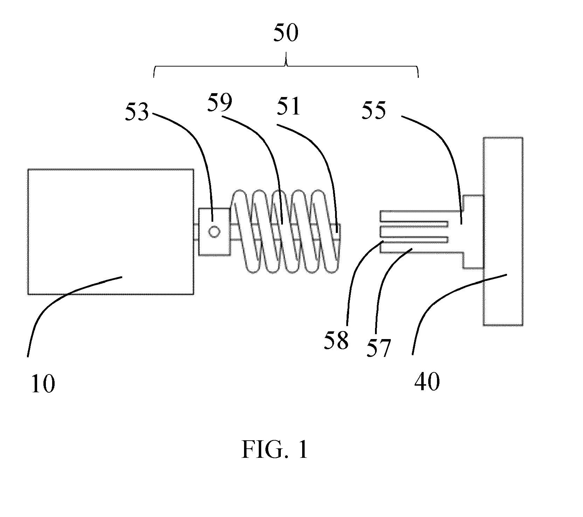

Referring to Fig. 1, a single phase actuator in accordance with one embodiment of the present invention includes a single phase motor 10 and a clutch 50. The motor 10 drives a load 40 to rotate via the clutch 50. The single phase motor 10 is preferably a single phase direct current brushless motor or a single phase permanent magnet synchronous motor.

The clutch 50 includes a driving shaft 51, a mounting base 53, a connecting base 55, and a resilient member 59. The driving shaft 51 is connected to the motor 10 and is driven by a rotor of the motor 10. It should be understood that the driving shaft 51 may be an output shaft of the motor itself or an external driving shaft connected to the motor output shaft or motor rotor via a coupling. In this embodiment, the mounting base 53 is connected to the driving shaft 51 for rotation with the driving shaft 51. It should be understood that the mounting base 53 may also be fixedly connected to other portions of the motor. The connecting base 55 is connected to the load 40 for driving the load 40 to rotate. The resilient member 59 is used to control the frictional force between the connecting base 55 and the driving shaft 51, such that the driving shaft 51 is able to drive the connecting base 55 with the load 40 to rotate when the rotation speed of the driving shaft 51 increases to a predetermined value. In this embodiment, the motor 10 is a single phase permanent magnet synchronous motor or a single phase permanent magnet direct current brushless motor.

The connecting base 55 includes a ring-shaped mounting portion and a plurality of fingers 57 extending outward from one side of the ring-shaped mounting portion. The fingers 57 extend in a direction toward the mounting base 53. Gaps 58 are formed between adjacent fingers 57. The presence of the gaps 58 allow the fingers 57 to deflect inwardly so as to reduce an inner diameter of a space defined by the plurality of fingers 57.

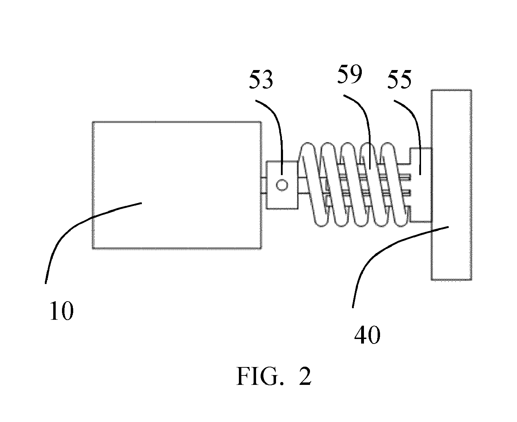

Referring to Fig. 2, the plurality of fingers 57, acting as a coupling portion of the connecting base 55, surrounds the driving shaft 51. The resilient member 59 is attached around an outer circumference of the fingers 57. In this embodiment, the resilient member 59 is a helical/coil spring. Two opposite ends of the helical spring 59 are attached to the mounting base 53 and the connecting base 55, respectively. The helical spring 59 surrounds the outer circumference of the fingers 57.

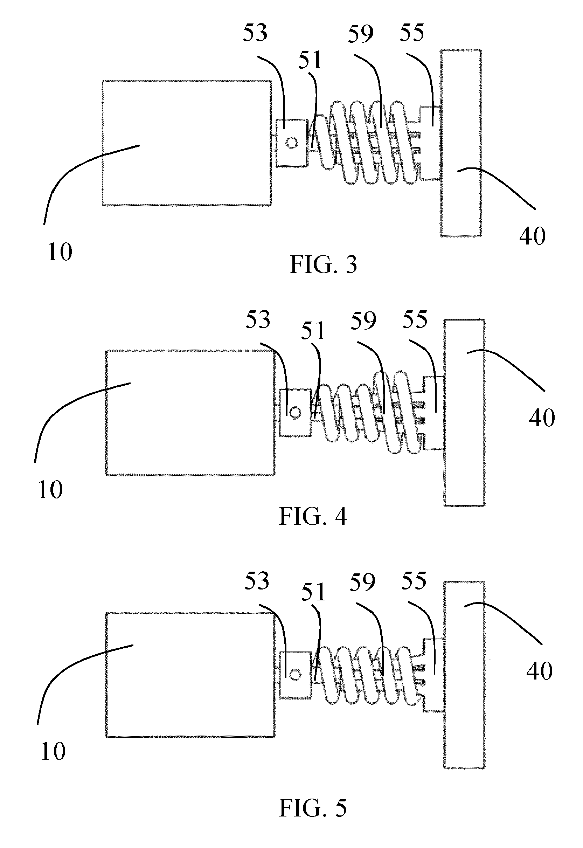

When the actuator enters a working state (rotation) from a stationary state, the changing process of the clutch is as shown in Fig. 2, Fig. 3, Fig. 4, and Fig. 5, respectively. Specifically, Fig. 2 illustrates the stationary state of the actuator where the motor is de-energized. When the motor 10 is energized to startup, the motor 10 drives the driving shaft 51 to rotate, the end of the resilient member 59 connected to the mounting base 53 rotates along with the mounting base 53, causing the helical spring 59 to gradually shrink from the end connected to the mounting base 53, such that the fingers 57 shrink/deform toward the driving shaft 51. The shrinking of the plurality of fingers 57 causes the fingers 57 to hold/contact the driving shaft 51 with a frictional force therebetween gradually increasing. As the fingers 57 shrink more tightly, the frictional force between the fingers 57 and the driving shaft 51 becomes larger. When the frictional force between the fingers 57 and the driving shaft 51 is large enough, the connecting base 55 is rotated under the driving of the frictional force, such that the load 40 is rotated along with the connecting base 55, as shown in Fig. 3 and Fig. 4. When the load 40 (or connecting base 55) and the driving shaft 51 have the same rotation speed, the resilient member 59 maintains at a stable compressed/deformed state, as shown in Fig. 5.

In order to increase the frictional force, an inner wall surface of the finger 57 is a rough arc surface with granular bulges/projections thereon. In addition, in order to facilitate the fingers 57 to return to its original state when the motor stops rotation, the fingers 57 are flexible.

It should be understood that, when the actuator turns from the working state (rotation) into a stop state, the changing process of the clutch is as shown from Fig. 5, Fig. 4, Fig. 3 to Fig. 2, respectively. That is, when the driving shaft 51 slows down or stops, the load 40 continues its rotation due to its inertia, resulting in a relative rotation between the connecting base 55 and the mounting base 53. The resilient member 59 is gradually released from the end of the resilient member 59 connected to the connecting base 55 to the end connected to the mounting base 53 and finally returned to the state as shown in Fig. 2.

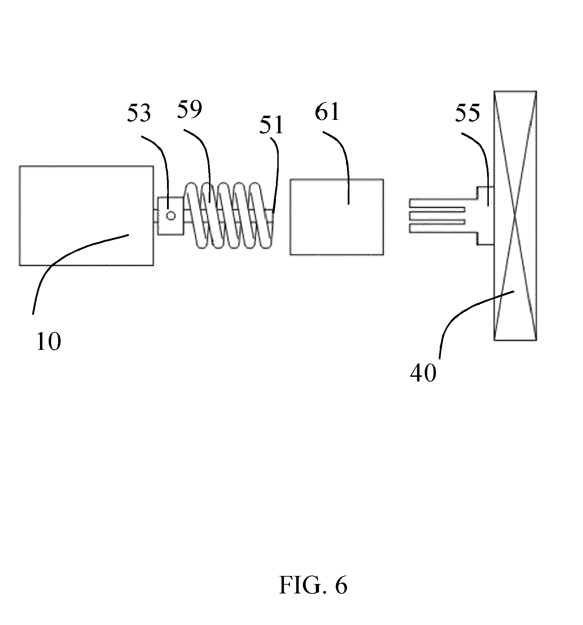

Fig. 6 illustrates an actuator in accordance with a second embodiment of the present invention, which is similar to the first embodiment except adding a protective tube 61 around the outer circumference of resilient member 59. When the motor 10 returns from the working state to the stop state, the driving shaft gradually stops rotating, and the load 40 together with the connecting base 55 continue rotating due to the inertia. During this course, the resilient member 59 is released from the shrinked state to its free state, the diameter of the resilient member 59 is gradually increased such that the fingers 57 gradually return to their original state and therefore release the driving shaft 51 to avoid rotating the driving shaft 51 in a reverse direction. If the rational inertia of the load 40 is too large, the end of the resilient member 59 connected to the connecting base 55 is continued to be rotated relative to the end of the resilient member 59 connected to the mounting base 53 after the resilient member 59 reaches its free/original state, which causes the resilient member 59 to be de-coiled and the diameter of the resilient member 59 to be increased compared to its original state. The resilient member 59 will probably be damaged. A protective tube 61 is preferably added to surround the resilient member 59 in order to limit/stop over increasing of the outer diameter of the resilient member 59, thereby preventing permanent deformation and hence permanent loss of resiliency of the resilient member 59.

When the motor drives a larger load, in order to address the motor startup failure problem due to the fact that the output torque of the motor is not large enough to drive the load at the phase of the startup, the present invention allows the driving shaft 51 to slip relative to the load 40 at the beginning of the motor startup. Only when the output torque of the motor reaches a certain value, the motor 10 drives the load 40 to rotate synchronously via the clutch 50, such that the motor can more easily and successfully start and drive a load with large rotational inertia without being damaged. In addition, by utilizing the actuator and its clutch provided by the present invention, there is no need to increase the size of the motor.

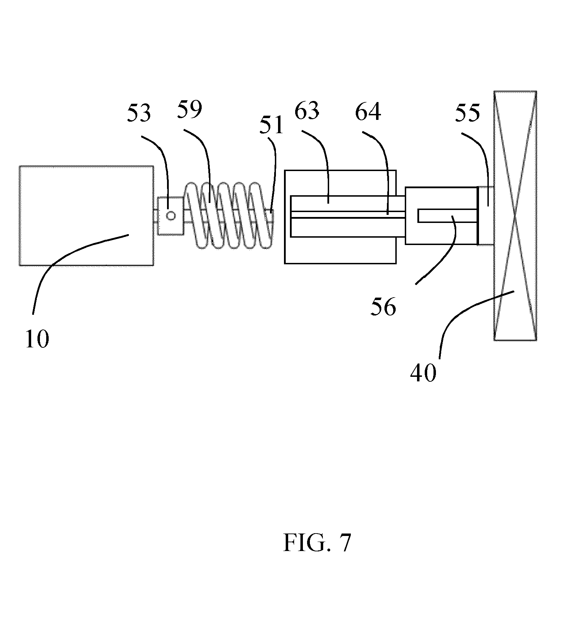

Referring to Fig. 7, in a third embodiment of the present invention, the connecting base 55 includes a rod-shaped or tubular coupling portion 56 that is separate from and coaxial with the driving shaft 51. The resilient member 59 is a helical spring helically surrounding the coupling portion 56 and driving shaft 51. A connecting tube 63 with a variable inner diameter is disposed to surround the coupling portion 56 and the driving shaft 51, i.e., the coupling portion 56 and the driving shaft 51 are respectively inserted into opposite ends of the connecting tube 63. The connecting tube 63 is surrounded by the resilient member 59. The connecting tube 63 tightly holds around the coupling portion 56 and the driving shaft 51 when the inner diameter of the resilient member 59 decreases.

In this embodiment, the connecting tube 63 has a C-shaped cross-section. That is, a body of the connecting tube 63 has an axially extending slit 64, so that the inner diameter of the connecting tube 63 is capable of decreasing to thereby tightly hold around the coupling portion 56 and the driving shaft 51. Preferably, the connecting tube 63 is flexible so that it can return to its original state upon removal of the external force.

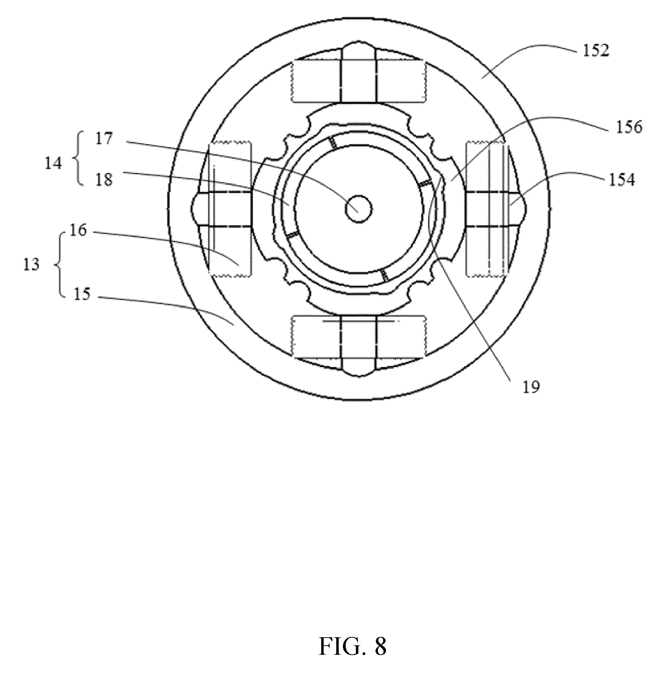

Fig. 8 illustrates a single phase permanent magnet brushless motor 10 utilized in the above embodiment. The motor is of an inner rotor type. The motor 10 includes a stator 13 and a rotor 14. The stator 13 includes a stator core such as a laminated stator core 15 and a winding 16 wound around the stator core 15. The rotor 14 includes a rotary shaft 17 and permanent magnetic poles 18. Outer surfaces of the permanent magnetic poles 18 confront the stator core 15 with an air gap formed there between to allow the rotor to rotate relative to the stator. Preferably, the air gap is a substantially even air gap, i.e. most part of the outer surfaces of the permanent magnetic poles 18 are coaxial with most part of an inner surface of the stator core 15. The stator core 15 includes a yoke 152 and a plurality of stator teeth 154 extending inwardly from the yoke 152. Ends of the stator teeth 154 away from the yoke 152 are connected together to form a ring 156. A plurality of positioning slots 19 is formed in an inner surface of the ring 156. The provision of the positioning slots 19 makes the rotor 14 stop at a position deviating from a dead point (i.e. a center line of the permanent magnetic pole deviates from a center line of a corresponding stator tooth by an angle) when the stator windings 16 are not energized. Preferably, the number of the teeth and the number of the positioning slots 19 are directly proportional to the number of the rotor permanent magnetic poles, and the stator teeth and the ring are integrally formed and are wound with the stator winding before being assembled to the yoke of the stator core. Alternatively, ends of adjacent stator teeth 154 may be separated from each other by a slot opening. The motor further includes a position sensor 20 (Fig. 8) such as a Hall sensor or a photo sensor. The position sensor 20 is used to sense the position of the rotor.

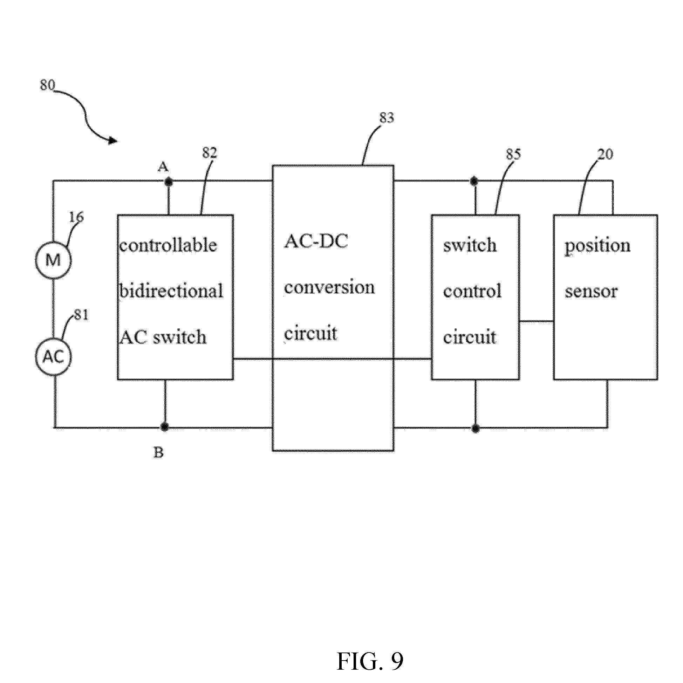

Fig. 9 is a block diagram showing a driving circuit 80 of the single phase permanent magnet brushless motor of the present invention. In the driving circuit 80, the stator windings 16 and an alternating current (AC) power 81 are connected in series between two nodes A and B. The AC power 81 is preferably a commercial AC power supply with a fixed frequency such as 50 Hz or 60 Hz and a supply voltage may be, for example, 110V, 220V or 230V. A controllable bidirectional AC switch 82 is connected between the nodes A and B, in parallel with the series-connected stator windings 16 and AC power 81. The bidirectional AC switch 82 is preferably a triode AC switch (TRIAC) having two anodes connected to the two nodes A and B, respectively. It should be understood that the controllable bidirectional AC switch 82 may be two silicon control rectifiers reversely connected in parallel, and control circuits may be correspondingly configured to control the two silicon control rectifiers in a preset way. An AC-DC conversion circuit 83 is connected between the two nodes A and B, in parallel with the switch 81. An AC voltage between the two nodes A and B is converted by the AC-DC conversion circuit 83 into a low voltage DC. The position sensor 20 may be powered by the low voltage DC power outputted from the AC-DC conversion circuit 83, for detecting the position of the magnetic poles of the permanent magnet rotor 14 of the synchronous motor 10 and outputting corresponding signals. A switch control circuit 85 is connected with the AC-DC conversion circuit 83, the position sensor 20 and the bidirectional AC switch 82, and is configured to control the bidirectional switch 82 to switch between a switch-on state and a switch-off state in a predetermined way, based on the magnetic pole position of the permanent magnet rotor and the polarity of the AC power source, such that the stator winding 16 urges the rotor to rotate only in the above-mentioned fixed starting direction during a starting phase of the motor. In this embodiment, in a case that the controllable bidirectional AC switch 82 is switched on, the two nodes A and B are short-circuited, and the AC-DC conversion circuit 83 does not consume electric energy because there is no electrical current flows through the AC-DC conversion circuit 83, hence, the utilization efficiency of electric energy can be improved significantly.

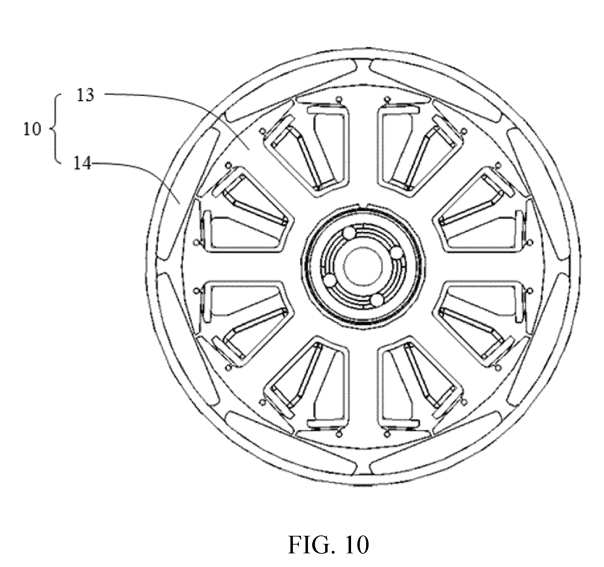

Fig. 10 illustrates another type of motor 10 utilized in the above embodiment. The motor 10 is of an outer rotor type, with the rotor 14 disposed surrounding the stator 13. An uneven air gap is formed between the permanent magnetic poles of the rotor and the stator core. Preferably, the air gap at each of the permanent magnetic poles is symmetrical about a center line of the each of the permanent magnetic poles, and has a radial width gradually increasing from a center toward two ends of the each of the permanent magnetic poles.

In the present invention, the load 40 may be a fluid generating device with a plurality of blades such as a fan used for bathroom fan, range hood and so on or an impeller used for a pump such as drain pump, circulation pump of a washing machine or dish washer.

Although the invention is described with reference to one or more preferred embodiments, it should be appreciated by those skilled in the art that various modifications are possible. Therefore, the scope of the invention is to be determined by reference to the claims that follow.

## Claims

1. A clutch (50) comprising:
a driving shaft (51);
a connecting base (55) for connecting with and driving a load (40), the connecting base (55) comprising a coupling portion; and
a resilient member (59) comprising one end attached relative to the driving shaft (51) for rotation with the driving shaft (51) and the other end attached to the connecting base, the resilient member (59) surrounding an outer circumference of the driving shaft (51) and the coupling portion;
wherein when a rotation speed of the driving shaft (51) is greater than a rotation speed of the connecting base (55), an inner diameter of the resilient member (59) gradually decreases so as to gradually couple the coupling portion of the connecting base (55) with the driving shaft (51), such that the rotation speed of the coupling portion of the connecting base (55) gradually approaches or reaches the rotation speed of the driving shaft (51).

2. The clutch (50) of claim 1, wherein the coupling portion of the connecting base (55) comprises a plurality of flexible fingers (57) surrounding the outer circumference of the driving shaft (51).

3. The clutch (50) of claim 2, wherein the resilient member (59) is a helical spring surrounding an outer circumference of the plurality of fingers (57).

4. The clutch (50) of claim 2, wherein an inner wall surface of the finger (57) is an arc surface.

5. The clutch (50) of claim 1, wherein the coupling portion of the connecting base (55) and the driving shaft (51) are separate and coaxial with each other, the resilient member (59) is a helical spring helically surrounding the coupling portion of the connecting base (55) and the driving shaft (51).

6. The clutch (50) of claim 5, wherein the clutch (50) further comprises a connecting tube (63) with a variable inner diameter, the connecting tube (63) surrounds the coupling portion and the driving shaft (51) and is surrounded by the resilient member (59), and the connecting tube (63) tightly holds around the coupling portion and the driving shaft (51) when an inner diameter of the resilient member (59) decreases.

7. The clutch (50) of any one of claims 1 to 6, wherein the clutch (50) further comprises a protective tube (61) mounted around an outer circumference of the resilient member (59).

8. The clutch (50) of any one of claims 1 to 6, wherein the clutch (50) further comprises a mounting base (53) attached to the driving shaft (51) for rotation with the driving shaft (51) and the one end of the resilient member (59) is attached to the mounting base (53).

9. An actuator comprising:
a single phase motor (10), and
a clutch (50), the clutch (50) comprising:
a driving shaft (51) driven by the motor (10);
a connecting base (55) for connecting with and driving a load (40), the connecting base (55) comprising a coupling portion; and
a resilient member (59) comprising one end attached relative to the driving shaft (51) for rotation with the driving shaft (51) and the other end attached to the connecting base (55), the resilient member (59) surrounding an outer circumference of the driving shaft (51) and the coupling portion;
wherein during the phase of the startup of the motor the driving shaft (51) is rotated relative to the connecting base (55) which results in an inner diameter of the resilient member (59) gradually decreasing so as to gradually couple the coupling portion with the driving shaft (51) to cause the connecting base (55) with the load (40) to be rotated by the driving shaft (51).

10. The actuator of claim 9, wherein the coupling portion comprises a plurality of flexible fingers (57) surrounding the outer circumference of the driving shaft (51).

11. The actuator of claim 9, wherein the coupling portion and the driving shaft (51) are coaxial with each other, and the resilient member is a helical spring helically surrounding the coupling portion and the driving shaft (51).

12. The actuator of any one of claims 9 to 11, wherein the clutch (50) further comprises a protective tube (61) mounted around an outer circumference of the resilient member (59).

13. The actuator of any one of claims 9 to 11, wherein the single phase motor (10) comprises a stator (13), a permanent magnet rotor (14) and a driving circuit (80), the stator (13) comprising a stator winding (16) adapted to be connected in series with an AC power source between a first node (A) and a second node (B), the driving circuit comprising:
a controllable bidirectional AC switch (82) connected between the first node (A) and the second node (B);
an AC-DC conversion circuit (83) connected in parallel with the controllable bidirectional AC switch (82) between the first node (A) and the second node (B);
a position sensor (20) configured to detect a magnetic pole position of the permanent magnet rotor (14); and
a switch control circuit (85) configured to control the controllable bidirectional AC switch (82) to be switched between a switch-on state and a switch-off state in a predetermined way, based on the magnetic pole position of the permanent magnet rotor (14) and the polarity of the AC power source such that the stator winding (16) drives the rotor (14) to rotate only in the predetermined direction,
wherein there is no current flowing through the AC-DC conversion circuit (83) when the first node (A) and the second node (B) are short circuited by the controllable bidirectional AC switch (82).

14. An electric apparatus comprises an actuator of any one of claims 9 to 13 and a fluid generating device driven by the actuator.

15. The electric apparatus of claim 14, wherein the fluid generating device is a fan or an impeller.
